(19) Europäisches Patentamt
European Patent Office
Office européen des brevets

(11) **EP 3 871 385 B1**

(12) # FASCICULE DE BREVET EUROPEEN

(45) Date de publication et mention
de la délivrance du brevet:
**08.02.2023 Bulletin 2023/06**

(21) Numéro de dépôt: **19813080.9**

(22) Date de dépôt: **22.10.2019**

(51) Classification Internationale des Brevets (IPC):
**H04L 25/02** (1968.09)    **H04B 1/18** (1968.09)

(52) Classification Coopérative des Brevets (CPC):
**H04L 25/0206**

(86) Numéro de dépôt international:
**PCT/FR2019/052503**

(87) Numéro de publication internationale:
**WO 2020/084244 (30.04.2020 Gazette 2020/18)**

(54) **PROCÉDÉ DE TRANSMISSION DE SYMBOLES PILOTES**

ÜBERTRAGUNGSVERFAHREN FÜR PILOTSYMBOLE

METHOD OF TRANSMITTING PILOT SYMBOLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2018 FR 1859882**

(43) Date de publication de la demande:
**01.09.2021 Bulletin 2021/35**

(73) Titulaire: **Orange**
**92130 Issy-les-Moulineaux (FR)**

(72) Inventeurs:
• **PHAN HUY, Dinh Thuy**
**92326 Châtillon Cedex (FR)**
• **VISOZ, Raphaël**
**92326 Châtillon Cedex (FR)**
• **RATAJCZAK, Philippe**
**92326 Châtillon Cedex (FR)**

(74) Mandataire: **Cabinet Beau de Loménie**
**158, rue de l'Université**
**75340 Paris Cedex 07 (FR)**

(56) Documents cités:
• **YANG GANG ET AL: "Multi-antenna Wireless Energy Transfer for Backscatter Communication Systems", IEEE JOURNAL ON SELECTED AREAS IN COMMUNICATIONS, IEEE SERVICE CENTER, PISCATAWAY, US, vol. 33, no. 12, 1 décembre 2015 (2015-12-01), pages 2974-2987, XP011590336, ISSN: 0733-8716, DOI: 10.1109/JSAC.2015.2481258 [extrait le 2015-11-16]**
• **HSIN-CHIN LIU ET AL: "Passive UHF RFID Tag With Backscatter Diversity", IEEE ANTENNAS AND WIRELESS PROPAGATION LETTERS, IEEE, PISCATAWAY, NJ, US, vol. 10, 1 janvier 2011 (2011-01-01), pages 415-418, XP011402939, ISSN: 1536-1225, DOI: 10.1109/LAWP.2011.2153173**
• **YEN-SHENG CHEN ET AL: "A Novel Dual-Antenna Structure for UHF RFID Tags", IEEE TRANSACTIONS ON ANTENNAS AND PROPAGATION, IEEE SERVICE CENTER, PISCATAWAY, NJ, US, vol. 59, no. 11, 1 novembre 2011 (2011-11-01), pages 3950-3960, XP011379484, ISSN: 0018-926X, DOI: 10.1109/TAP.2011.2164199**

**Description**

Arrière-plan de l'invention

L'invention se rapporte au domaine général des télécommunications et concerne plus particulièrement l'estimation d'un canal de transmission entre deux dispositifs de communication sans fil, dont l'un au moins est équipé d'une pluralité d'antennes.

Les systèmes de communication radio, tels que par exemple les réseaux mobiles ou WIFI (Wireless Fidelity), s'appuient de plus en plus aujourd'hui sur des dispositifs de communication sans fil multi-antennes (ex. terminaux, stations de base, etc.). Pour permettre à un dispositif émetteur muni d'une ou plusieurs antennes de délivrer un message à un dispositif récepteur muni d'une pluralité d'antennes avec une haute efficacité spectrale, il est classique d'utiliser au niveau du dispositif émetteur une technique de précodage mettant en oeuvre une formation de faisceaux (ou « beamforming » en anglais) permettant de transporter simultanément plusieurs flux de données sur les mêmes fréquences. Des exemples de techniques de précodage connues sont notamment la formation de faisceaux propres (ou « eigenbeamforming » en anglais), la formation de faisceaux de type MRT (pour « Maximum Ratio Transmission » ou transmission de ratio maximum), ZF (pour « Zero Forcing » ou forçage à zéro), ou SVD (pour « Singular Value Décomposition » ou décomposition en valeurs singulières), etc.

Lorsque de telles techniques de précodage sont utilisées en émission, l'interférence entre flux au niveau du dispositif récepteur est en théorie nulle, ce qui permet de simplifier le schéma de réception appliqué par le dispositif récepteur, qui consiste alors simplement à égaliser le canal de transmission entre le dispositif émetteur et le dispositif récepteur vu par chacun des flux indépendamment. Pour déterminer les coefficients du précodeur (ou de façon équivalente de la matrice de précodage) à appliquer sur les symboles de données destinés à être transmis vers le dispositif récepteur, il est nécessaire au dispositif émetteur de connaître et donc d'estimer le canal de transmission le séparant du dispositif récepteur (et plus précisément, le canal de transmission séparant chaque antenne du dispositif émetteur de chaque antenne du dispositif récepteur).

Dans les systèmes de communication mettant en oeuvre un mode de duplexage temporel (ou TDD pour Time Division Duplex), il est admis que le canal de transmission entre le dispositif émetteur et le dispositif récepteur peut être considéré comme réciproque : autrement dit, le canal de transmission dans le sens dispositif émetteur vers dispositif récepteur est considéré comme identique au canal de transmission dans le sens dispositif récepteur vers dispositif émetteur. Pour permettre au dispositif émetteur d'estimer le canal de transmission séparant chacune de ses antennes des antennes du dispositif récepteur, le dispositif récepteur envoie au dispositif émetteur, depuis chacune de ses antennes, des signaux véhiculant des symboles pilotes prédéfinis, connus du dispositif émetteur. On note qu'aucune limitation n'est attachée à la technique de multiplexage utilisée par le dispositif récepteur pour envoyer ces signaux : il peut s'agir indifféremment d'une technique de multiplexage temporelle, fréquentielle, par code, etc. Le dispositif émetteur estime alors, à partir des symboles pilotes qu'il a reçus, le canal de transmission dans le sens dispositif récepteur vers dispositif émetteur, puis il exploite la réciprocité du canal pour déterminer les coefficients du précodeur à utiliser en transmission, en fonction de la modulation et du codage à appliquer (éventuellement pour chaque flux de données s'il y en a plusieurs à transmettre simultanément). Le dispositif émetteur émet ensuite ses données en utilisant le précodeur ainsi déterminé.

Ce principe de fonctionnement impose au dispositif récepteur d'émettre des signaux véhiculant des symboles pilotes depuis chacune de ses antennes. A cet effet, deux configurations du dispositif récepteur peuvent être envisagées.

Selon une première configuration, le dispositif récepteur est équipé de plusieurs chaînes d'émission RF (Radio Fréquence), autant que d'antennes, chaque d'émission RF comprenant un générateur d'ondes RF généralement associé à un amplificateur RF. Or, un tel amplificateur RF est un élément coûteux et consommateur en énergie. L'utilisation de plusieurs chaînes d'émission RF pour un dispositif récepteur tel que par exemple un terminal sans fil peut donc s'avérer problématique en termes de coût et d'autonomie de la batterie du terminal.

Une deuxième configuration consiste à équiper le dispositif récepteur d'une unique chaîne d'émission RF et de basculer alternativement sur cette chaîne d'émission chacune des antennes d'émission au moyen d'un commutateur (ou « switch » en anglais). L'inconvénient d'une telle configuration est qu'elle induit une perte dite d'insertion du commutateur (ou « insertion loss » en anglais) qui peut diminuer la puissance d'émission de quelques dB. En outre, elle perturbe l'émission des données qui a lieu en même temps que l'émission des symboles pilotes, le canal de transmission vu par les données variant considérablement à chaque basculement vers une nouvelle antenne.

Il convient de noter que, bien que décrits dans un contexte de précodage, les inconvénients précités sont également rencontrés dans d'autres contextes où l'estimation d'un canal de transmission entre un dispositif émetteur et un dispositif récepteur multi-antennes est requise à l'émission, comme par exemple dans des applications de guidage ou de localisation.

Le document intitulé « Multi-antenna Wireless Energy Transfer for Backscatter Communication Systems », Yang Gang et al, IEEE Journal on Selected Areas in Communications, IEEE, vol. 33, no ; 12, pages 2974-2987, 01.12.2015, décrit un procédé de transmission et d'estimation de canal entre un lecteur RFID multi-antennes et une pluralité d'étiquettes.

Le document intitulé « Passive UHF RFID Tag With Backscatter Diversity », Hsin-Chin Liu et al, IEEE Antennas and Wireless Propagation Letters, IEEE, vol. 10, pages 415-418, 01.01.2011, décrit un procédé de transmission de données entre par un dispositif passif UHF RFID et un lecteur RFID.

Objet et résumé de l'invention

L'invention permet notamment de pallier à ces inconvénients en proposant un procédé de transmission, par un premier dispositif de communication, de symboles pilotes destinés à permettre à un deuxième dispositif de communication d'estimer un canal de transmission entre le premier et le deuxième dispositif de communication, le premier dispositif de communication comprenant une première antenne configurée de sorte à être active en transmission et au moins une deuxième antenne configurée de sorte à être passive en transmission. Conformément à l'invention, le procédé de transmission comprend :

- une étape de transmission, par la première antenne active, d'au moins un signal véhiculant des symboles pilotes associés à ladite première antenne active, et durant laquelle ladite au moins une deuxième antenne passive est réglée sur une impédance dite de transparence, ladite impédance de transparence étant choisie de sorte à obtenir un niveau de signal rétrodiffusé par ladite au moins une deuxième antenne passive inférieur à un premier seuil ; et
- au moins une étape de transmission par la première antenne active d'au moins un signal véhiculant des symboles pilotes associés à ladite au moins une deuxième antenne passive, et durant laquelle ladite au moins une deuxième antenne passive est réglée sur une impédance dite de diffusion choisie de sorte à obtenir un niveau de signal rétrodiffusé par ladite au moins une deuxième antenne passive supérieur à un deuxième seuil supérieur au premier seuil.

Corrélativement, l'invention vise aussi un dispositif de communication, dit premier dispositif de communication, configuré pour transmettre des symboles pilotes destinés à permettre à un deuxième dispositif de communication d'estimer un canal de transmission entre le premier et le deuxième dispositif de communication, le premier dispositif de communication comprenant une première antenne configurée de sorte à être active en transmission et au moins une deuxième antenne configurée de sorte à être passive en transmission, la première antenne active étant en outre configurée pour :

- transmettre au moins un signal véhiculant des symboles pilotes associés à ladite première antenne active, ladite au moins une deuxième antenne passive étant alors réglée sur une impédance dite de transparence, cette impédance de transparence étant choisie de sorte à obtenir un niveau de signal rétrodiffusé par ladite au moins une deuxième antenne passive inférieur à un premier seuil ; et
- transmettre au moins un signal véhiculant des symboles pilotes associés à ladite au moins une deuxième antenne passive, ladite au moins une deuxième antenne passive étant alors réglée sur une impédance dite de diffusion choisie de sorte à obtenir un niveau de signal rétrodiffusé par ladite au moins une deuxième antenne passive supérieur à un deuxième seuil supérieur au premier seuil.

L'invention vise également un procédé d'estimation d'un canal de transmission entre un premier dispositif de communication multi-antennes et un deuxième dispositif de communication, ledit procédé étant destiné à être mis en oeuvre par le deuxième dispositif de communication et comprenant, pour au moins une antenne du deuxième dispositif de communication :

- une étape de réception par ladite au moins une antenne d'une pluralité de signaux transmis conformément à un procédé de transmission selon l'invention par le premier dispositif de communication et véhiculant des symboles pilotes ; et
- une étape d'estimation du canal de transmission entre les antennes du premier dispositif et ladite antenne du deuxième dispositif de communication en utilisant les symboles pilotes véhiculés par lesdits signaux reçus.

Aucune limitation n'est attachée à l'algorithme utilisé par le deuxième dispositif de communication pour réaliser l'estimation du canal de transmission. Il peut s'agir par exemple d'un algorithme d'estimation linéaire à erreur quadratique moyenne minimale ou LMMSE (Linear Minimum Mean Square Error).

Par « symboles pilotes associés à une antenne du premier dispositif de communication», on entend ici les symboles pilotes qui sont destinés à être utilisés par le deuxième dispositif de communication pour estimer le canal de transmission entre chacune de ses antennes et l'antenne en question du premier dispositif de communication.

Par ailleurs, par « antenne active en transmission », on entend une antenne connectée à une chaîne d'émission RF comprenant un générateur d'ondes RF qui émet des ondes RF, et éventuellement un amplificateur RF. Par opposition, une « antenne passive en transmission » est une antenne qui n'est pas connectée à une telle chaîne d'émission, et en particulier à un générateur d'ondes RF.

On note qu'aucune limitation n'est attachée à la nature des dispositifs de communication considérés, quand bien même l'invention a une application privilégiée lorsque le deuxième dispositif de communication est un terminal sans fil tel que par exemple un téléphone mobile, un ordinateur portable, etc., ayant une autonomie limitée.

L'invention peut ainsi s'appliquer à tout type de dispositif de communication (terminal, station de base, etc.), comprenant une ou plusieurs antennes, ces antennes pouvant être colocalisées ou réparties en différents lieux géographiques.

En outre, aucune limitation n'est attachée à l'utilisation qui est faite de l'estimation du canal de transmission obtenue grâce à l'invention. Celle-ci peut être utilisée comme indiqué précédemment pour déterminer les coefficients d'un précodeur à appliquer au niveau du deuxième dispositif de communication, mais elle peut également être appliquée dans d'autres contextes comme par exemple pour des applications de guidage, de localisation, de sélection d'antennes, etc.

L'invention propose donc une solution permettant l'estimation du canal de transmission entre un premier dispositif de communication multi-antennes et un deuxième dispositif de communication qui d'une part, s'appuie sur la transmission via une unique antenne du premier dispositif de communication qualifiée d' « active » (les autres antennes étant considérées comme passives) des signaux véhiculant les symboles pilotes nécessaires pour l'estimation et associés aux différentes antennes du premier dispositif de communication, et d'autre part, exploite la rétrodiffusion « ambiante » de ces signaux par les autres antennes du premier dispositif de communication qui sont, elles, passives.

La rétrodiffusion ambiante est une technique connue, décrite notamment dans le document de N. Van Huynh et al. intitulé « Ambient Backscatter Communications: A Contemporary Survey », Networking and Internet Architecture (cf. NI), décembre 2017. Elle permet à un émetteur d'exploiter des signaux RF existants, comme par exemple des signaux de radio, de télévision, de téléphonie mobile, pour transmettre des données à un récepteur sans émettre d'onde radio supplémentaire. Le transmetteur modifie (module) à cet effet les ondes radio issues de sources ambiantes (tours de télévision, stations radio, etc.) et les réfléchit vers le récepteur ; le récepteur détecte alors les modifications apportées par le transmetteur et extrait les données portées par ces modifications.

L'invention exploite avantageusement ce principe pour transporter des séquences pilotes permettant l'estimation d'un canal multi-antennes entre deux dispositifs de communication. Une unique antenne est activée en transmission au niveau du premier dispositif de communication, et les séquences pilotes permettant l'estimation du canal de transmission entre toutes les antennes du premier dispositif de communication et celle(s) du deuxième dispositif de communication sont transmises par cette unique antenne active. Le multiplexage adopté pour transmettre les différentes séquences pilotes peut être indifféremment un multiplexage temporel (i.e. les séquences pilotes associées aux différentes antennes sont transmises successivement durant des intervalles de temps distincts), un multiplexage fréquentiel (i.e. les séquences pilotes associées aux différentes antennes sont transmises à des fréquences différentes) ou un multiplexage en temps et en fréquence.

Lorsque l'antenne active du premier dispositif de communication transmet la séquence pilote qui lui est associée (c'est-à-dire qui permet l'estimation du canal entre cette antenne et celle(s) du deuxième dispositif de communication), les autres antennes du premier dispositif de communication sont maintenues dans un état dans lequel le niveau de signal qu'elles sont susceptibles de rétrodiffuser à partir de l'onde émise par l'antenne active est négligeable voire minimal (inférieur à un premier seuil). De cette sorte, le deuxième dispositif de communication ne reçoit « que » l'onde incidente portant la séquence pilote de l'antenne active. Au contraire, lorsque la séquence pilote associée à une antenne passive est transmise par l'antenne active, cette antenne passive est basculée, via une modification adéquate de son impédance, dans un état où elle rétrodiffuse le signal RF qui porte sa séquence pilote qu'elle reçoit de l'antenne active avec un niveau de signal suffisant pour pouvoir être détecté par le deuxième dispositif de communication (i.e. supérieur à un deuxième seuil, lui-même supérieur au premier seuil). Le signal reçu par le deuxième dispositif de communication contient de cette sorte la contribution du canal de transmission entre la ou les antennes du deuxième dispositif de communication et l'antenne active, mais également la contribution du canal de transmission entre la ou les antennes du deuxième dispositif de communication et l'antenne passive à laquelle est associée la séquence pilote transmise, ce qui permet au deuxième dispositif de communication, via un algorithme d'estimation adéquat, d'estimer le canal de transmission entre le deuxième dispositif de communication et cette antenne passive.

On note que la notion de seuils du niveau de signal rétrodiffusé peut être implicite, par exemple lorsque l'impédance de diffusion est choisie de sorte à maximiser le niveau de signal rétrodiffusé et l'impédance de transparence est choisie de sorte à minimiser ce niveau de signal. Il est en effet toujours possible dans ces deux cas particulier de déterminer arbitrairement un deuxième seuil et un premier seuil au sens de l'invention.

L'invention se distingue donc d'une rétrodiffusion ambiante classique telle que décrite dans le document de N. Van Huynh et al. en ce qu'elle propose un procédé dans lequel la source des ondes RF, à savoir l'antenne active du premier dispositif de communication, connaît l'existence des « rétrodiffuseurs », à savoir les antennes passives du premier dispositif de communication, et adapte ce qu'elle transmet en fonction de ces derniers. Conformément à l'invention, la configuration des antennes active et passives du premier dispositif de communication est menée conjointement de sorte à permettre au deuxième dispositif de communication de réaliser une estimation du canal de transmission qui le sépare du premier dispositif de communication.

En exploitant de la sorte le principe de rétrodiffusion, l'invention offre une solution peu coûteuse et conduisant à une consommation d'énergie réduite pour permettre l'estimation d'un canal de transmission multi-antennes. Une seule chaîne d'émission RF est en effet nécessaire au niveau du premier dispositif de communication en dépit de la présence d'antennes multiples. En outre, des données utiles peuvent être transmises conjointement avec les séquences de symboles pilotes sans que celles-ci ne soient impactées par un changement du canal de transmission.

Aucune limitation n'est attachée au nombre d'antennes du premier dispositif de communication. Le premier dispositif de communication peut en particulier comprendre plus de deux antennes, et donc plus d'une antenne passive.

Dans ce mode de réalisation comprenant plusieurs antennes passives, lors de ladite au moins une étape de transmission, les antennes passives du premier dispositif de communication sont réglées de sorte qu'une seule antenne passive rétrodiffuse à la fois durant un même intervalle de temps et dans une même bande de fréquence déterminée.

De cette sorte, on s'assure que l'interférence provenant des autres antennes du premier dispositif de communication est minimisée, ce qui facilite l'estimation du canal de transmission par le deuxième dispositif de communication à partir des signaux rétrodiffusés qu'il reçoit.

A cet effet, dans un mode particulier de réalisation dans lequel le premier dispositif de communication comprend une pluralité d'antennes passives, lorsque lors d'une étape de transmission, la première antenne active transmet ledit au moins un signal véhiculant les symboles pilotes associés à l'une desdites antennes passives, la ou les autres antennes passives du premier dispositif de communication sont réglées sur leurs impédances de transparence.

Comme mentionné précédemment, différents types de multiplexage peuvent être envisagés pour transmettre les symboles pilotes associés aux différentes antennes du premier dispositif de communication.

Ainsi, selon un mode particulier de réalisation, les signaux véhiculant les symboles pilotes associés auxdites antennes passives sont transmis par la première antenne active durant des intervalles de temps disjoints.

Ce mode de réalisation vise un multiplexage temporel des symboles pilotes.

En variante, on peut envisager un multiplexage fréquentiel (i.e. les signaux véhiculant les symboles pilotes associés auxdites antennes passives sont transmis par la première antenne active sur des bandes de fréquence disjointes), ou encore un multiplexage en temps et en fréquence.

Ainsi, dans un mode particulier de réalisation, au moins deux signaux véhiculant des symboles pilotes associés à deux antennes passives distinctes sont transmis par la première antenne active dans des bandes de fréquence disjointes. En outre, dans ce mode de réalisation, lesdits au moins deux signaux peuvent alors être transmis par la première antenne active durant des intervalles de temps se recoupant ou au contraire durant des intervalles de temps disjoints.

Dans un mode particulier de réalisation, les symboles pilotes transmis par la première antenne active sont choisis de sorte à limiter ou à minimiser un niveau de bruit d'estimation du canal de transmission au niveau du deuxième dispositif de communication.

Ce mode de réalisation permet de faciliter et d'optimiser l'estimation du canal de transmission à partir des signaux reçus par le deuxième dispositif de communication incluant les signaux rétrodiffusés par les antennes passives du premier dispositif de communication.

Ainsi par exemple, dans un mode particulier de réalisation, les symboles pilotes transmis par la première antenne active sont choisis de sorte que, si A désigne une matrice de dimensions TxN, où N est le nombre d'antennes du premier dispositif de communication, T est le nombre total de symboles pilotes transmis par la première antenne active associés aux N antennes du premier dispositif de communication, et ladite matrice A contient dans une colonne les T symboles pilotes transmis par la première antenne active et dans sa ou ses autres colonnes les symboles pilotes rétrodiffusés par ladite au moins une deuxième antenne passive, la matrice $A^+A$ est inversible, $^+$ désignant l'opérateur hermitien.

Dans ce mode de réalisation, pour minimiser le bruit d'estimation au niveau du récepteur, les symboles pilotes transmis par la première antenne peuvent être choisis notamment de sorte à minimiser la trace de la matrice inverse de la matrice $A^+A$.

Ce mode de réalisation est avantageux notamment lorsque le deuxième dispositif de communication n'a pas connaissance de la covariance du bruit et de l'interférence, ni de la covariance du canal de transmission.

Comme mentionné précédemment, le réglage des antennes passives est réalisé en ajustant les impédances sur lesquelles elles sont réglées pour faire en sorte que le niveau du signal rétrodiffusé par ces antennes soit supérieur à un seuil voire maximal, ou au contraire inférieur à un seuil voire minimal. On note que les impédances peuvent varier d'une antenne passive à l'autre et dépendre notamment de la forme de l'antenne passive, de sa taille, etc.

Dans un mode particulier de réalisation, l'impédance de transparence d'au moins une antenne passive du premier dispositif de communication est choisie égale à l'impédance d'adaptation de cette antenne passive.

Ce choix permet de minimiser le niveau du signal rétrodiffusé par l'antenne passive en question.

Dans un mode particulier de réalisation, l'impédance de diffusion d'au moins une antenne passive du premier dispositif de communication est obtenue en reliant ladite antenne passive à une charge d'impédance nulle ou infinie.

Ce choix permet de maximiser le niveau du signal rétrodiffusé par l'antenne passive en question, notamment pour une antenne comprenant un plan de masse et un circuit RF adapté entre l'antenne et le plan de masse, ou une antenne de type guide d'onde.

D'autres choix pour les impédances de diffusion et de transparence peuvent toutefois être envisagés en variante, notamment en fonction du type d'antennes considérées. Ainsi par exemple, pour des antennes alimentées en mode différentiel comme des antennes de type dipôle, l'impédance de diffusion peut être obtenue en reliant l'antenne passive à une charge d'impédance infinie, et l'impédance de transparence à une charge d'impédance nulle. Préférentiellement, on choisit des impédances de diffusion et de transparence pour une antenne passive offrant un large écart entre les niveaux de signaux rétrodiffusés par l'antenne passive pour permettre l'estimation du canal de transmission par le deuxième dispositif de communication.

A cet effet, dans un mode particulier de réalisation, l'impédance de diffusion et l'impédance de transparence d'une antenne passive sont choisies de sorte que la différence entre le niveau du signal rétrodiffusé par l'antenne passive réglée sur son impédance de diffusion et le niveau du signal rétrodiffusé par l'antenne passive réglée sur son impédance de transparence soit supérieure à un niveau de bruit d'estimation du canal de transmission au niveau du deuxième dispositif de communication.

Dans un mode particulier de réalisation, les différentes étapes du procédé de transmission sont déterminées par des instructions de programmes d'ordinateurs.

En conséquence, l'invention vise aussi un programme d'ordinateur sur un support d'informations, ce programme étant susceptible d'être mis en oeuvre dans un dispositif de communication ou plus généralement dans un ordinateur, ce programme comportant des instructions adaptées à la mise en oeuvre des étapes d'un procédé de transmission tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un autre aspect encore, l'invention vise un système de communication comprenant :

- un premier dispositif de communication multi-antennes selon l'invention ; et
- un deuxième dispositif de communication comprenant au moins une antenne apte à recevoir une pluralité de signaux transmis par le premier dispositif de communication et véhiculant des symboles pilotes, ledit deuxième dispositif de communication comprenant en outre un module d'estimation du canal de transmission entre les antennes du premier dispositif de communication et ladite antenne du deuxième dispositif de communication configuré pour utiliser les symboles pilotes véhiculés par lesdits signaux reçus.

Le procédé d'estimation et le système de communication selon l'invention bénéficient des mêmes avantages que le procédé de transmission et le dispositif de communication selon l'invention.

On peut également envisager, dans d'autres modes de réalisation, que le procédé de transmission, le procédé d'estimation, le dispositif de communication et le système de communication selon l'invention présentent en combinaison tout ou partie des caractéristiques précitées.

<u>Brève description des dessins</u>

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un système de communication conforme à l'invention dans un mode particulier de réalisation ;
- la figure 2 représente une configuration des antennes d'un premier dispositif de communication conforme à l'invention appartenant au système de la figure 1 ;
- les figures 3 et 4 représentent schématiquement l'architecture matérielle du premier dispositif de communication de la figure 2 et d'un deuxième dispositif de communication du système de la figure 1, dans un mode particulier de réalisation ;
- la figure 5 représente, sous forme d'ordinogramme, les principales étapes d'un procédé de transmission tel qu'il est mis en oeuvre dans un mode particulier de réalisation par le premier dispositif de communication du système de la figure 1 ; et

- la figure 6 représente, sous forme d'ordinogramme, les principales étapes d'un procédé d'estimation tel qu'il est mis en oeuvre dans un mode particulier de réalisation par le deuxième dispositif de communication du système de la figure 1.

Description détaillée de l'invention

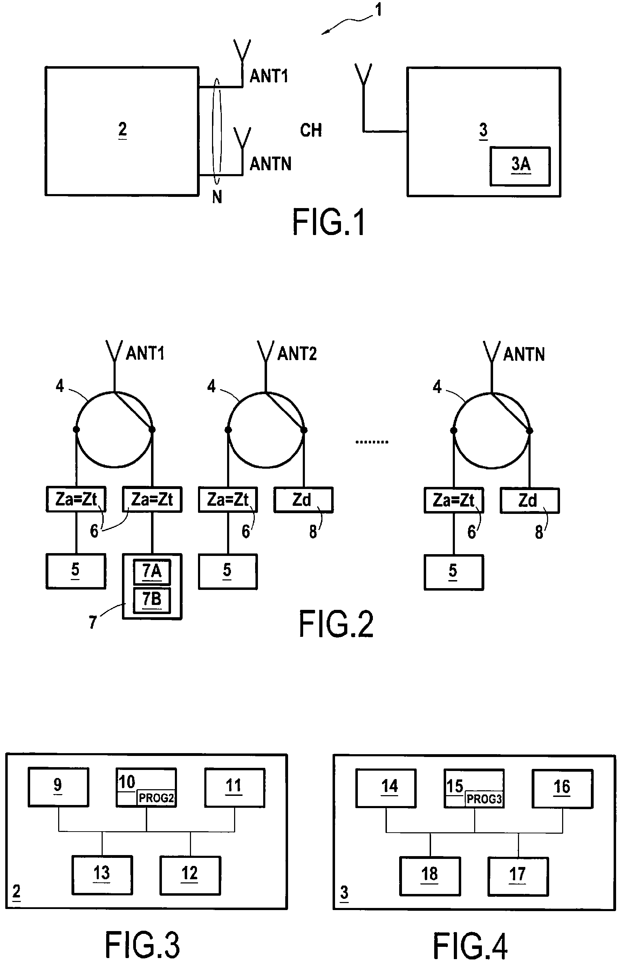

La **figure 1** représente, dans son environnement, un système de communication 1 conforme à l'invention dans un mode particulier de réalisation.

Dans l'exemple envisagé à la figure 1, le système de communication 1 fait partie d'un réseau de télécommunications mobiles fonctionnant selon un mode de duplexage temporel (ou TDD). Il comprend un premier dispositif de communication 2, conforme à l'invention, et un deuxième dispositif de communication 3. Le premier dispositif de communication 2 est par exemple un terminal mobile, tel qu'un téléphone intelligent (ou « smartphone » en anglais) ou un ordinateur portable, et le deuxième dispositif de communication 3 est une station de base du réseau de télécommunications mobiles.

Ces exemples ne sont bien entendu donnés qu'à titre illustratif et l'invention s'applique à d'autres dispositifs de communication.

Dans le mode de réalisation décrit ici, le premier dispositif de communication 2 est équipé d'une pluralité d'antennes, et plus précisément de N antennes ANT1, ANT2..., ANTN, N désignant un entier supérieur ou égal à 2, qu'il peut utiliser indifféremment ici pour émettre et recevoir des données, notamment à destination et en provenance du deuxième dispositif de communication. On suppose par ailleurs, dans un souci de simplification, que le deuxième dispositif de communication 3 dispose d'une unique antenne.

Le premier et le deuxième dispositif de communication sont séparés par un canal de transmission noté CH dont on s'intéresse ici à l'estimation des coefficients permettant de façon connue en soi de le modéliser. Dans l'exemple envisagé ici, le canal CH est dans le sens premier dispositif de communication 2 vers deuxième dispositif de communication 3 à entrées multiples et sortie unique (aussi désigné par MISO pour Multiple Input Single Output), et à entrée unique et sorties multiples (aussi désigné par SIMO pour Single Input Multiple Ouput) dans le sens deuxième dispositif de communication 3 vers premier dispositif de communication 2. En variante, le canal CH peut être un canal à entrées et sorties multiples (ou MIMO pour Multiple Input Multiple Output).

Comme mentionné précédemment, en raison du mode TDD adopté par le système de communication 1, une hypothèse de réciprocité du canal de transmission peut être faite : cela signifie que les coefficients du canal de transmission dans le sens premier dispositif de communication 2 vers deuxième dispositif de communication 3 sont considérés comme identiques aux coefficients du canal de transmission dans le sens deuxième dispositif de communication 3 vers premier dispositif de communication 2. On suppose ici que l'estimation du canal de transmission CH séparant le premier dispositif de communication 2 du deuxième dispositif de communication 3 est réalisée par le deuxième dispositif de communication 3. Aucune limitation n'est attachée à l'usage que fait le deuxième dispositif de communication 3 de cette estimation (par exemple, elle peut être utilisée pour dériver les coefficients d'un précodeur utilisé par le deuxième dispositif de communication 3 pour envoyer des données au premier dispositif de communication 2, ou pour toute autre application telle que décrite précédemment).

La **figure 2** représente schématiquement la configuration des antennes du premier dispositif de communication 2 dans le mode particulier de réalisation considéré ici.

Chaque antenne ANTn, n=1,...,N du premier dispositif de communication 2 comprend un plan de masse (non représenté sur la figure) et est connectée, par l'intermédiaire ici d'un commutateur 4, à une chaîne RF de réception 5 se trouvant entre l'antenne ANTn et son plan de masse, connue en soi et non décrite ici. Entre la chaîne RF de réception 5 et l'antenne ANTn se trouve un adaptateur d'impédance 6 qui permet d'adapter l'impédance de l'antenne ANTn à l'impédance de la chaîne de réception 5. Un tel composant, qui se présente sous la forme d'un circuit électrique, est connu en soi et n'est pas décrit plus en détail ici : sa fonction est de transformer par l'intermédiaire d'une charge l'impédance de l'antenne ANTn en une impédance conjuguée de l'impédance de la chaîne de réception 5 pour maximiser la puissance transmise entre l'antenne ANTn et la chaîne de réception 5. On désigne dans la suite par Za l'impédance d'adaptation de l'antenne ANTn. Par souci de simplification, on suppose ici que toutes les antennes du premier dispositif de communication 2 sont identiques et ont les mêmes impédances d'adaptation. On note qu'en pratique, les impédances d'adaptation peuvent différer d'une antenne à l'autre notamment si celles-ci ont des formes ou des tailles différentes. Aucune limitation n'est attachée ici à la forme, à la taille ni même à la nature des antennes, celles-ci pouvant être quelconques.

Dans la suite de la description, lorsque l'impédance de l'antenne ANTn est adaptée au moyen de l'adaptateur d'impédance 6 par exemple, on dit que l'antenne ANTn est réglée sur son impédance d'adaptation.

Par ailleurs, conformément à l'invention, une seule des antennes ANTn, n=1,...,N du premier dispositif de communication 2 est connectée, par l'intermédiaire du commutateur 4, à une chaîne RF de transmission 7. La chaîne RF de transmission 7 comprend notamment ici un générateur d'ondes RF 7A, apte à émettre des ondes RF (signaux RF) portant les données que le premier dispositif de communication 2 souhaite transmettre sur le réseau de télécommunications mobiles, et un amplificateur RF 7B.

Dans l'exemple illustré à la figure 2, on suppose que seule l'antenne ANT1 est connectée à la chaîne RF de transmission 7 : autrement dit, dans cette configuration, seule l'antenne ANT1 est à proprement parler active en transmission, c'est-à-dire en mesure de générer via le générateur d'ondes RF 7A et d'amplifier par l'intermédiaire de l'amplificateur RF 7B un signal radio véhiculant des données. Cet exemple n'est bien entendu donné qu'à titre illustratif, et n'importe quelle autre antenne du premier dispositif de communication peut être choisie alternativement pour être reliée à la chaîne de transmission 7 et être ainsi active en transmission.

Toutes les autres antennes ANT2,...,ANTN du premier dispositif de communication 2 sont par opposition à l'antenne ANT1, passives en transmission, c'est-à-dire qu'elles ne sont reliées (ou connectées) à aucune chaîne RF de transmission active générant des signaux RF. Conformément à l'invention, chaque antenne passive en transmission du premier dispositif de communication 2 peut être réglée selon deux configurations différentes qui ont un impact sur son rayonnement et la façon dont elle rediffuse les ondes incidentes. Ce réglage s'effectue en agissant sur (et plus précisément en modifiant) l'impédance de l'antenne passive au moyen d'un composant ou circuit électrique approprié placé en entrée de l'antenne passive.

Plus précisément, chaque antenne passive en transmission peut être réglée soit sur une impédance dite de transparence notée Zt (i.e. son impédance est modifiée par l'intermédiaire du circuit électrique pour obtenir une impédance équivalente égale à l'impédance de transparence Zt), soit sur une impédance dite de diffusion notée Zd (i.e. son impédance est modifiée par l'intermédiaire du circuit électrique pour obtenir une impédance équivalente égale à l'impédance de diffusion Zd). Ce réglage s'effectue, dans le mode de réalisation décrit ici, par l'intermédiaire du commutateur 4 comme décrit plus en détail ci-après.

L'impédance de transparence Zt d'une antenne ANTn, n=2,...,N est choisie de sorte que lorsque l'antenne ANTn est réglée sur cette impédance de transparence, le signal reçu (c'est-à-dire l'onde incidente reçue) par cette antenne ANTn provenant de l'antenne active ANT1 lorsque celle-ci transmet des données sur le réseau de télécommunications mobiles, est en majeure partie si ce n'est entièrement absorbé par l'antenne ANTn et donc par conséquent peu voire pas « re-rayonné » par l'antenne ANTn. On note que le niveau du signal reçu par l'antenne ANTn correspondant au signal émis par l'antenne ANT1 est proportionnel au couplage entre les antennes ANT1 et ANTn. Autrement dit, lorsque l'antenne ANTn est réglée sur son impédance de transparence, le signal rétrodiffusé par cette antenne ANTn est négligeable voire nul, et en tout état de cause inférieur à un certain seuil (premier seuil au sens de l'invention). On note que ce seuil peut être implicite dès lors que le signal rétrodiffusé est minimal.

Un exemple d'une telle impédance de transparence est l'impédance d'adaptation de l'antenne ANTn évoquée précédemment qui permet d'obtenir un signal rediffusé par l'antenne ANTn minimal. Dans le mode de réalisation décrit ici, l'impédance de transparence Zt de l'antenne passive ANTn, n=2,...N est ainsi choisie égale à l'impédance d'adaptation Za de l'antenne ANTn : l'antenne ANTn peut de cette sorte être réglée aisément sur son impédance de transparence Za en basculant le commutateur 4 sur la chaîne de réception 5 associée à l'antenne ANTn. Il convient de noter que ce réglage de l'antenne sur son impédance d'adaptation est le réglage usuel classiquement adopté lorsque l'on utilise des antennes.

L'impédance de diffusion Zd d'une antenne ANTn, n=2,...,N est au contraire choisie de sorte que, lorsque l'antenne ANTn est réglée sur cette impédance de diffusion, le signal reçu (c'est-à-dire l'onde incidente reçue) par cette antenne ANTn provenant de l'antenne active ANT1 lorsque celle-ci transmet des données sur le réseau de télécommunications mobiles, est en majeure partie si ce n'est entièrement rediffusé, c'est-à-dire réfléchi et re-rayonné par l'antenne ANTn. Autrement dit, lorsque l'antenne ANTn est réglée sur son impédance de diffusion, le signal rétrodiffusé par cette antenne ANTn est non négligeable voire maximal, et en tout état de cause supérieur à un certain seuil (deuxième seuil au sens de l'invention, supérieur au premier seuil). On note que ce seuil peut être implicite dès lors que le signal rétrodiffusé est maximal.

De façon connue, le niveau du signal rediffusé par l'antenne ANTn est proportionnel à la désadaptation de l'impédance de l'antenne ANTn. Pour régler l'antenne ANTn sur son impédance de diffusion Zd, l'antenne ANTn est donc reliée ici, par l'intermédiaire du commutateur 4, à un composant ou circuit électrique 8 qui permet par l'intermédiaire d'une charge de modifier l'impédance de l'antenne ANTn, n=2,...,N, en vue de la désadapter. Ce composant ou circuit électrique 8 fonctionne de façon similaire à l'adaptateur d'impédance 6 en ce sens qu'il est utilisé en entrée de l'antenne ANTn pour modifier son impédance ; il est toutefois configuré pour modifier cette impédance non pas en l'impédance d'adaptation Za mais en l'impédance de diffusion Zd. Dans l'exemple envisagé ici d'une antenne ANTn reliée à un plan de masse via un circuit RF, une façon simple de désadapter l'impédance de l'antenne ANTn et de maximiser le signal rediffusé par l'antenne ANTn est de choisir un composant 8 formant un circuit ouvert ou réalisant un court-circuit au niveau de l'accès de l'antenne passive ANTn (autrement dit, équivalent à une charge d'impédance infinie ou nulle placée en entrée de l'antenne passive ANTn).

On note qu'avec un circuit ouvert ou un court-circuit en entrée de l'antenne passive ANTn, le signal rediffusé par l'antenne passive ANTn est alors proportionnel au coefficient de transmission entre l'antenne ANT1 et l'antenne ANTn pondéré par son efficacité de rayonnement. A titre illustratif, dans un contexte de télécommunications mobiles, le niveau du signal ainsi rediffusé est généralement inférieur de (-15) dB par rapport au signal émis par l'antenne ANT1.

En outre, par souci de simplification, on suppose ici que toutes les antennes du premier dispositif de communication sont identiques, rayonnent dans une même bande de fréquences, et on considère des impédances de transparence et de diffusion identiques pour chacune d'entre elles. En variante, les impédances de transparence et de diffusion peuvent différer d'une antenne à l'autre et dépendre notamment de la forme, de la taille des antennes, etc.

Par ailleurs, dans le mode de réalisation décrit ici, on a choisi des impédances de transparence et de diffusion conduisant respectivement à un signal rétrodiffusé par l'antenne passive ANTn, n=2,...,N minimal ou maximal compte tenu de l'antenne considérée. Comme mentionné précédemment, selon cette hypothèse, il est toujours possible de définir des seuils, même arbitraires, tels que le signal rétrodiffusé soit inférieur ou supérieur à ces seuils. On note que l'homme du métier, en fonction de la nature des antennes considérées, saurait sans difficulté déterminer quelles impédances considérer pour obtenir un signal rétrodiffusé par le ou les antennes passives tantôt minimal tantôt maximal. Ainsi, par exemple pour une antenne de type guide d'onde, les impédances de transparence et de diffusion peuvent être obtenues respectivement avec une charge adaptée et avec une charge nulle ou infinie. Pour une antenne alimentée en mode différentiel telle une antenne de type dipôle, les impédances de transparence et de diffusion peuvent être obtenues respectivement avec une charge nulle et avec une charge non nulle, préférentiellement infinie.

En variante, un choix différent des impédances de transparence et de diffusion (i.e. ne conduisant pas nécessairement à un signal rétrodiffusé tantôt minimal tantôt maximal) peut être envisagé. Préférentiellement toutefois, on s'assurera que l'écart entre les niveaux de signal rétrodiffusé selon si l'antenne passive est réglée sur son impédance de transparence ou sur son impédance de diffusion est suffisamment important pour être exploitable par le deuxième dispositif de communication. Par exemple, les impédances de diffusion et l'impédance de transparence d'une antenne passive pourront être choisies de sorte que la différence entre le niveau (ou la puissance) du signal rétrodiffusé par l'antenne passive réglée sur son impédance de diffusion et le niveau (ou la puissance) du signal rétrodiffusé par l'antenne passive réglée sur son impédance de transparence soit supérieure à un niveau de bruit d'estimation du canal de transmission au niveau du deuxième dispositif de communication 3.

Dans le mode de réalisation décrit ici, le premier dispositif de communication 2 est un terminal mobile qui a l'architecture matérielle d'un ordinateur telle que représentée schématiquement à la **figure 3**.

Il comprend notamment un processeur 9, une mémoire morte 10, une mémoire non volatile 11, une mémoire vive 12, ainsi que des moyens de communication 13. Ces moyens de communication 13 comprennent notamment les antennes ANT1,...,ANTN du dispositif de communication 2, les commutateurs 4, les chaînes de transmission et de réception 5 et 7 et les circuits électriques 6 et 8 décrits précédemment. Ils permettent ainsi au premier dispositif de communication 2 de communiquer sur le réseau de télécommunications mobiles et notamment avec le deuxième dispositif de communication 3.

La mémoire morte 10 du premier dispositif de communication 2 constitue un support d'enregistrement conforme à l'invention, lisible par le processeur 9 et sur lequel est enregistré un programme d'ordinateur PROG2 conforme à l'invention, comportant des instructions pour l'exécution d'un procédé de transmission selon l'invention. Le programme PROG2 comprend notamment des instructions de commande des éléments matériels du premier dispositif de communication 2, et en particulier de ses moyens de communication 13 et des composants de ces moyens de communication 13 (antennes, commutateurs, circuits électriques, etc.). Ces instructions de commande permettent de configurer ou d'activer les moyens de communication 13 pour mettre en oeuvre le procédé de transmission selon l'invention, comme détaillé davantage ultérieurement.

Dans le mode de réalisation décrit ici, le deuxième dispositif de communication 3 est une station de base, qui a elle-aussi l'architecture matérielle d'un ordinateur telle que représentée schématiquement à la **figure 4**.

Il comprend notamment un processeur 14, une mémoire morte 15, une mémoire non volatile 16, une mémoire vive 17, ainsi que des moyens de communication 18. Ces moyens de communication 18 comprennent notamment la (ou les) antenne(s) du dispositif de communication 3 ainsi qu'une (ou des) chaînes de réception et de transmission destinées à être reliées à ces antennes. Ils permettent ainsi au deuxième dispositif de communication 3 de communiquer sur le réseau de télécommunications mobiles et notamment avec le premier dispositif de communication 2.

La mémoire morte 15 du deuxième dispositif de communication 3 constitue un support d'enregistrement, lisible par le processeur 14 et sur lequel est enregistré un programme d'ordinateur PROG3 comportant des instructions pour l'exécution d'un procédé d'estimation selon l'invention. Le programme PROG3 définit notamment des instructions de commande des éléments matériels du deuxième dispositif de communication 3, et en particulier de ses moyens de communication 18 et des composants de ces moyens de communication 18, ainsi qu'un module d'estimation 3A du canal de transmission CH, détaillé davantage ultérieurement.

Conformément à l'invention, l'estimation du canal de transmission CH est réalisée par le module d'estimation 3A du deuxième dispositif de communication 3 à partir de symboles pilotes transmis par le premier dispositif de communication 2. Pour permettre au module d'estimation 3A d'estimer le canal de transmission entre chacune des antennes ANTn, n=1,...,N du premier dispositif de communication 2 et son antenne, des séquences de symboles pilotes connus à la fois du premier et du deuxième dispositif de communication sont émises par le premier dispositif de communication 2 pour chacune de ses antennes ANT1,...,ANTN. On note $a_n$, la séquence de symboles pilotes associée à l'antenne ANTn, n=1,...,N du premier dispositif de communication 2. Chaque séquence de symboles pilotes $a_n$ est ici un vecteur colonne complexe de dimension $L_n$, $L_n$ désignant un entier supérieur à 1. Chaque symbole pilote de la séquence $a_n$ est un symbole pris dans une constellation finie d'une modulation M. M est par exemple ici une modulation QPSK (Quadrature Phase Shift Keying) ; l'invention s'applique toutefois à d'autres modulations.

Par souci de simplification ici, on suppose que toutes les séquences de symboles pilotes associées aux différentes antennes ANTn, n=1,...,N du premier dispositif de communication 2 sont de même longueur L. Toutefois, en variante, des longueurs différentes peuvent être envisagées. Par ailleurs, on considère ici une unique séquence de symboles pilotes pour estimer le canal de transmission entre une antenne ANTn, n=1,...,N du premier dispositif de communication 2 et l'antenne du dispositif de communication 3.

En variante, plusieurs séquences pilotes peuvent être considérées pour chaque antenne (pour bénéficier de redondance par exemple).

En outre, comme mentionné précédemment, on envisage ici une unique antenne au niveau du deuxième dispositif de communication 3. L'invention s'applique cependant à un nombre quelconque d'antennes au niveau du deuxième dispositif de communication 3, le fonctionnement décrit ci-après pour l'unique antenne du deuxième dispositif de communication 3 étant reproduit pour chacune de ses antennes.

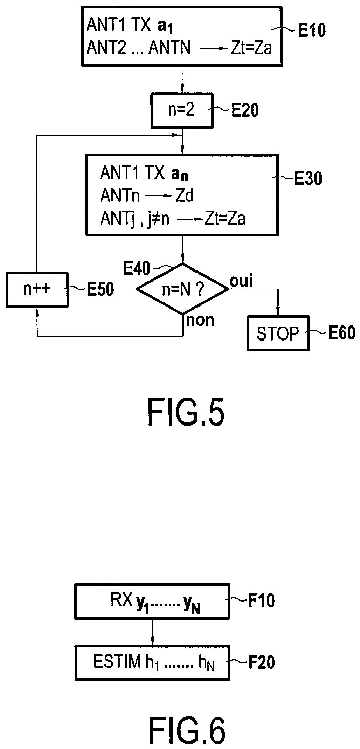

Nous allons maintenant décrire plus en détail, en référence **à la figure 5**, les différentes étapes du procédé de transmission selon l'invention mis en oeuvre dans un mode particulier de réalisation par le premier dispositif de communication 2 pour transmettre au deuxième dispositif de communication 2 les symboles pilotes associés à ses différentes antennes ANT1,...,ANTN, et permettre ainsi au deuxième dispositif de communication 2 d'estimer le canal CH.

Dans l'exemple envisagé ici, le premier dispositif de communication 2 disposant de N antennes ANT1,...,ANTN, N séquences $a_n$, n=1,...,N de symboles pilotes sont transmises par le premier dispositif de communication 2 au deuxième dispositif de communication 3 pour lui permettre d'estimer le canal CH. Ces séquences de symboles pilotes sont véhiculées par des signaux émis par le premier dispositif de communication 2 via ses antennes. Dans le mode de réalisation décrit ici, on envisage un multiplexage temporel des séquences de symboles pilotes, c'est-à-dire que chaque séquence de symboles pilotes associé à une antenne est émis durant un intervalle de temps distinct, sans recoupement entre les intervalles de temps attribués aux différentes antennes. Cette hypothèse n'est toutefois pas limitative en soi, et un multiplexage fréquentiel ou un multiplexage en temps et en fréquence peut être envisagé en variante.

Plus précisément, dans le mode de réalisation décrit ici, le premier dispositif de communication 2 émet dans un premier temps, via son antenne active en transmission ANT1, un signal (i.e. une onde) véhiculant la séquence de symboles pilotes $a_1$ associée à celle-ci (étape E10). A cet effet, l'antenne active ANT1 est basculée sur la chaîne de transmission 7 (c'est-à-dire connectée à celle-ci) par l'intermédiaire de son commutateur 4, et le signal véhiculant la séquence de symboles pilote $a_1$ associée à celle-ci est généré par le générateur RF 7A et amplifié par l'amplificateur RF 7B avant d'être transmis à proprement parler par l'antenne active ANT1 sur le canal de transmission CH à destination du deuxième dispositif de communication 3.

Pendant toute la durée P1 de cette transmission, conformément à l'invention, les antennes passives ANT2,...,ANTN sont réglées, au moyen de leur commutateur 4, sur leur impédance de transparence (autrement dit ici sur leur impédance d'adaptation Za). Dans le mode de réalisation décrit ici, ce réglage consiste à envoyer une instruction à chaque commutateur 4 de chaque antenne passive pour qu'il bascule sur la chaîne de réception 5. Ce réglage permet d'adapter au moyen de l'adaptateur d'impédance 6 chaque antenne passive ANTn, n=2,... N. De cette sorte, le signal reçu par chaque antenne passive ANTn, n=2,...,N qui est proportionnel au couplage entre l'antenne active ANT1 et chaque antenne passive ANTn, n=2,...,N, est absorbé par l'antenne passive ANTn et peu voire pas re-rayonné.

Il en découle que le signal reçu par le deuxième dispositif de communication 3 peut s'écrire sous la forme :

$$y_1 = a_1 h_1 + n_1$$

où $n_1$ désigne un vecteur colonne complexe de dimension $L_1 = L$ caractérisant le bruit et les interférences introduit par le canal, et $h_1$ désigne le coefficient du canal entre l'antenne active ANT1 et l'antenne du dispositif de communication 3. Par souci de simplification, on suppose que le canal est un canal à évanouissement plat et on considère ici un unique coefficient pour chaque antenne. L'invention s'applique toutefois à d'autres types de canaux et notamment à des canaux multi-trajets. On note qu'en pratique, même en étant adaptée, chaque antenne passive re-diffuse une partie de l'onde incidente qu'elle a reçue de l'antenne active ANT1, de sorte que le signal $y_1$ contient une contribution de chacune des antennes passives ANT2,...,ANTN. Cette contribution est toutefois négligeable par rapport au niveau du signal direct transmis depuis l'antenne active ANT1 et est incluse de manière implicite dans la convention adoptée ci-dessus dans le coefficient $h_1$.

Puis, conformément à l'invention, le premier dispositif de communication 2 transmet ensuite successivement, durant des intervalles de temps de durées respectives Pn, n=2,...,N (avec P1=P2=...=PN dans l'exemple envisagé ici), les différentes séquences pilotes $a_n$ associées respectivement aux antennes passives ANT2...ANTN du premier dispositif de communication 2 (étapes E20 et E40-E60).

Plus précisément, durant chaque intervalle de temps de durée Pn, n=2,...,N, le premier dispositif de communication 2 émet, via son antenne active en transmission ANT1, un signal (i.e. une onde) véhiculant la séquence de symboles pilotes $a_n$ associée à l'antenne passive ANTn (étape E30). A cet effet, l'antenne active ANT1 est maintenue sur la chaîne de transmission 7 par l'intermédiaire de son commutateur 4, et le signal véhiculant la séquence de symboles pilote $a_n$ associée à l'antenne passive ANTn (c'est-à-dire permettant au dispositif de communication 3 d'estimer le canal entre l'antenne passive ANTn et son antenne) est généré par le générateur RF 7A et amplifié par l'amplificateur RF 7B avant d'être transmis à proprement parler par l'antenne active ANT1 sur le canal de transmission CH à destination du deuxième dispositif de communication 3.

Pendant toute la durée Pn de cette transmission, conformément à l'invention, l'antenne passive ANTn est réglée, au moyen de son commutateur 4, sur son impédance de diffusion Zd. Dans le mode de réalisation décrit ici, ce réglage consiste à envoyer une instruction au commutateur 4 de l'antenne passive ANTn pour qu'il bascule sur le circuit électrique 8. Ce réglage permet de basculer l'antenne ANTn sur son impédance de diffusion Zd. Ainsi configurée, l'antenne passive ANTn réfléchit le signal reçu de l'antenne active ANT1 véhiculant les symboles pilotes de la séquence $a_n$.

On note que dans un souci de simplification, on suppose ici que toutes les antennes ANTn, n=1,...,N du premier dispositif de communication 2 rayonnent (et donc rediffusent) dans une même bande de fréquences. Toutefois cette hypothèse n'est pas limitative en soi et l'invention s'applique également lorsque des bandes de fréquences distinctes sont envisagées (auquel cas, le signal émis par l'antenne active ANT1 portant la séquence de symboles pilotes associée à une antenne passive est émis par l'antenne active ANT1 dans la bande de fréquences dans laquelle l'antenne passive rétrodiffuse).

Lorsque le premier dispositif de communication 1 dispose de plusieurs antennes passives c'est-à-dire pour N supérieur à 2, les antennes passives distinctes de l'antenne passive ANTn (autrement dit les antennes ANTj, j=2,...,N avec j≠n), sont réglées durant la transmission de la séquence de symboles pilotes $a_n$ par l'antenne active ANT1 sur leurs impédances de transparence Zt=Za, de sorte que seule l'antenne passive ANTn rétrodiffuse l'onde incidente provenance de l'antenne active ANT1. En d'autres mots, une seule antenne passive rétrodiffuse à la fois durant un même intervalle de temps et dans une même bande de fréquence déterminée.

Ce réglage des antennes passives ANTj, j=2,...,N avec j≠n est réalisé ici en envoyant une instruction à chaque commutateur 4 de chaque antenne passive ANTj pour qu'il bascule sur la chaîne de réception 5. Ce réglage permet d'adapter au moyen de l'adaptateur d'impédance 6 chaque antenne passive ANTj, j=2,...,N avec j≠n. De cette sorte, le signal reçu par chaque antenne passive ANTj, j=2,...,N avec j≠n qui est proportionnel au couplage entre l'antenne active ANT1 et l'antenne passive ANTj, est absorbé par l'antenne passive ANTj et peu voire pas re-rayonné.

Le signal reçu par le deuxième dispositif de communication 3 peut alors s'écrire sous la forme :

$$y_n = a_n h_1 + a_n h_n + n_n$$

où $n_n$ désigne un vecteur colonne complexe de dimension $L_n = L$ caractérisant le bruit et les interférences introduit par le canal, et $h_n$ désigne le coefficient du canal entre l'antenne passive ANTn et l'antenne du dispositif de communication 3. Comme mentionné précédemment, le coefficient $h_n$ inclut de manière implicite les contributions des autres antennes passives bien que négligeables par rapport au signal signal direct émis par l'antenne active ANT1 et au signal rétrodiffusé par l'antenne passive ANTn.

Le premier dispositif de communication 2 réitère l'étape E30 pour toutes ses antennes passives (étapes de test E40, d'itération E50 de l'indice n et d'arrêt E60 quand toutes les séquences de symboles pilotes $a_n$ pour n=1,...,N ont été transmises). Il va de soi qu'un ordre différent que l'ordre chronologique adopté ici peut être considéré pour envoyer les signaux pilotes associés aux différentes antennes du premier dispositif de communication 2.

Comme mentionné précédemment, dans le mode de réalisation décrit ici, un multiplexage temporel des séquences de symboles pilotes est mis en oeuvre par le premier dispositif de communication 1, i.e., les signaux véhiculant les symboles pilotes associés aux antennes passives sont transmis par l'antenne active ACT1 durant des intervalles de temps disjoints. Un autre type de multiplexage peut cependant être envisagé en variante par premier dispositif de communication 1. Par exemple, au moins deux signaux véhiculant des symboles pilotes associés à deux antennes passives distinctes peuvent être transmis par l'antenne active ANT1 dans des bandes de fréquence disjointes (multiplexage en fréquence). En outre, ces signaux peuvent être transmis durant des intervalles de temps se recoupant ou non.

A partir des différents signaux $y_1,...,y_n$ reçus par le deuxième dispositif de communication 3, celui-ci peut estimer le canal de transmission CH c'est-à-dire les coefficients $h_1,...,h_N$ du canal CH.

La **figure 6** représente les différentes étapes du procédé d'estimation selon l'invention mis en oeuvre dans un mode particulier de réalisation par le deuxième dispositif de communication 3 pour estimer ces coefficients.

On suppose donc que le deuxième dispositif de communication 3 a reçu via son antenne et ses moyens de communication 18, les signaux $y_1,...,y_n$ décrits précédemment (étape F10). Ces signaux peuvent s'écrire sous la forme :

$$\begin{bmatrix} y_1 \\ y_2 \\ \vdots \\ y_N \end{bmatrix} = \begin{bmatrix} a_1 & 0 & \cdots & 0 \\ a_2 & a_2 & \cdots & 0 \\ \vdots & \vdots & \vdots & \vdots \\ a_N & 0 & \cdots & a_N \end{bmatrix} \begin{bmatrix} h_1 \\ h_2 \\ \vdots \\ h_N \end{bmatrix} + \begin{bmatrix} n_1 \\ n_2 \\ \vdots \\ n_N \end{bmatrix}$$

On désigne dans la suite par A la matrice de dimensions TxN, où T désigne le nombre total de symboles pilotes transmis par l'antenne active ANT1 associés aux N antennes du premier dispositif de communication 2 (T=N.L ici), soit :

$$A = \begin{bmatrix} a_1 & 0 & \cdots & 0 \\ a_2 & a_2 & \cdots & 0 \\ \vdots & \vdots & \vdots & \vdots \\ a_N & 0 & \cdots & a_N \end{bmatrix}$$

La matrice A contient dans la première colonne les T=N.L symboles pilotes transmis par l'antenne active ACT1 (c'est-à-dire contenus dans les séquences $a_1,...,a_N$ et dans ses autres colonnes les symboles pilotes rétrodiffusés les antennes passives ANTn, n=2,...,N du premier dispositif de communication 2.

Le deuxième dispositif de communication 3 estime alors les coefficients $h_1,...,h_N$ du canal CH à partir des signaux $y_1, ... , y_n$ reçus (étape F20), via son module d'estimation 3A.

A cet effet, différents algorithmes d'estimation peuvent être mis en oeuvre par le module d'estimation 3A.

Par exemple, le module d'estimation 3A peut envisager un algorithme d'estimation de type forçage à zéro (ou ZF pour Zéro Forcing) qui ne requiert pas de connaissance de la matrice de covariance du bruit ni de la matrice de covariance du canal. On suppose ici à cet effet que la matrice

$$A^\dagger A$$

est inversible,

$$\dagger$$

désignant l'opérateur hermitien. Il convient de noter que cette hypothèse peut être vérifiée via un choix approprié des symboles pilotes utilisés pour former les séquences $a_1,...,a_N$. Ces symboles pilotes étant prédéterminés pour être connus à la fois du premier dispositif de communication 2 et du deuxième dispositif de communication 3, cela ne pose aucune difficulté de choisir ces symboles pour qu'ils respectent la condition évoquée ci-dessus.

On note que pour limiter le bruit d'estimation au niveau du deuxième dispositif de communication 3, on peut en outre choisir les symboles pilotes de sorte à minimiser la trace de l'inverse de la matrice

$$A^\dagger A$$

.

Par exemple, on peut choisir $a_n = a$ quel que soit n=1,...,N, avec $a$ comprenant L symboles complexes appartenant à la constellation de la modulation M et vérifiant $a^\dagger a = L$. Dans ce cas, la matrice

$$A^\dagger A$$

est de rang plein, ce qui permet de calculer son inverse. Par exemple, pour N=3, l'inverse de la matrice

$$A^\dagger A$$

est égale à :

$$\left(A^\dagger A\right)^{-1} = \frac{1}{L}\begin{bmatrix} 1 & -1 & -1 \\ -1 & 2 & 1 \\ -1 & 1 & 2 \end{bmatrix}$$

les bruits d'estimation sur les composantes $h_1,h_2,h_3$ étant égaux à $\frac{\sigma^2}{L}, \frac{2\sigma^2}{L}, \frac{2\sigma^2}{L}$ pour une matrice de covariance du bruit de la forme $\sigma^2 I$ où I désigne la matrice identité.

L'estimation des coefficients $h_1,...,h_N$ du canal CH peut alors être réalisée par le module d'estimation 3 en multipliant le vecteur des signaux reçus $\begin{bmatrix} y_1 \\ y_2 \\ \vdots \\ y_N \end{bmatrix}$ par la matrice $(A^\dagger A)^{-1} A^\dagger$ de façon connue en soi.

En variante, un algorithme d'estimation linéaire à erreur quadratique moyenne minimale ou LMMSE (Linear Minimum Mean Square Error) peut être appliqué par le module d'estimation 3A. Cet algorithme consiste à multiplier le vecteur des signaux reçus $\begin{bmatrix} y_1 \\ y_2 \\ \vdots \\ y_N \end{bmatrix}$ par la matrice $R_h A^\dagger (A R_h A^\dagger + R_n)^{-1}$ où $R_h$ désigne la matrice de covariance du canal CH et $R_n$ la matrice de covariance du bruit et de l'interférence. Une matrice diagonale peut en outre être appliquée à la suite de cette matrice pour obtenir un estimateur non biaisé.

Bien entendu ces exemples d'estimateurs ne sont donnés qu'à titre illustratif et d'autres estimateurs peuvent être utilisés par le module d'estimation 3A.

On note que comme il a été vu précédemment, selon l'estimateur utilisé, des conditions peuvent être requises pour le choix des symboles pilotes. Ceci peut également avoir une influence sur le séquencement par le premier dispositif de communication 2 des signaux véhiculant les symboles pilotes. De manière préférentielle, on choisira les séquences de symboles pilotes et leur séquencement en temps et/ou en fréquence de sorte à minimiser le niveau de bruit d'estimation du canal de transmission au niveau du deuxième dispositif de communication 3.

## Revendications

1. Procédé de transmission, par un premier dispositif de communication (2), de symboles pilotes destinés à permettre à un deuxième dispositif de communication (3) d'estimer un canal de transmission entre le premier et le deuxième dispositif de communication, le premier dispositif de communication comprenant une première antenne (ANT1) configurée de sorte à être active en transmission et au moins une deuxième antenne (ANT2,...,ANTN) configurée de sorte à être passive en transmission, ledit procédé étant **caractérisé en ce qu'**il comprend :

   - une étape de transmission (E10), par la première antenne active (ANT1), d'au moins un signal véhiculant des symboles pilotes associés à ladite première antenne active, et durant laquelle ladite au moins une deuxième antenne passive (ANT2,...,ANTN) est réglée sur une impédance dite de transparence (Zt,Za), ladite impédance de transparence étant choisie de sorte à obtenir un niveau de signal rétrodiffusé par ladite au moins une deuxième antenne passive inférieur à un premier seuil ; et
   - au moins une étape de transmission (E20) par la première antenne active (ANT1) d'au moins un signal véhiculant des symboles pilotes associés à ladite au moins une deuxième antenne passive (ANT2,...,ANTN), et durant laquelle ladite au moins une deuxième antenne passive (ANT2,...,ANTN) est réglée sur une impédance dite de diffusion (Zd) choisie de sorte à obtenir un niveau de signal rétrodiffusé par ladite au moins une deuxième antenne passive supérieur à un deuxième seuil supérieur au premier seuil.

2. Procédé de transmission selon la revendication 1 dans lequel le premier dispositif de communication comprend une pluralité d'antennes passives (ANT2,...,ANTN), et lors de ladite au moins une étape de transmission, lesdites antennes passives sont réglées de sorte qu'une seule antenne passive rétrodiffuse à la fois durant un même intervalle de temps et dans une même bande de fréquence déterminée.

3. Procédé de transmission selon la revendication 2 dans lequel lorsque lors d'une étape de transmission, la première antenne active transmet ledit au moins un signal véhiculant les symboles pilotes associés à l'une desdites antennes passives, la ou les autres antennes passives du premier dispositif de communication sont réglées sur leurs impédances de transparence.

4. Procédé de transmission selon la revendication 2 ou 3 dans lequel les signaux véhiculant les symboles pilotes associés auxdites antennes passives sont transmis par la première antenne active durant des intervalles de temps disjoints.

5. Procédé de transmission selon l'une quelconque des revendications 1 à 4 dans lequel les symboles pilotes transmis par la première antenne active sont choisis de sorte à minimiser un niveau de bruit d'estimation du canal de transmission au niveau du deuxième dispositif de communication.

6. Procédé de transmission selon l'une quelconque des revendications 1 à 5 dans lequel les symboles pilotes transmis par la première antenne active sont choisis de sorte que, si A désigne une matrice de dimensions TxN, où N est le nombre d'antennes du premier dispositif de communication, T est le nombre total de symboles pilotes transmis par la première antenne active associés aux N antennes du premier dispositif de communication, et ladite matrice A contient dans une colonne les T symboles pilotes transmis par la première antenne active et dans sa ou ses autres colonnes les symboles pilotes rétrodiffusés par ladite au moins une deuxième antenne passive, la matrice A'A est inversible, $^†$ désignant l'opérateur hermitien.

7. Procédé de transmission selon la revendication 6 dans lequel les symboles pilotes transmis par la première antenne sont choisis de sorte à minimiser la trace de la matrice inverse de la matrice A'A.

8. Procédé de transmission selon l'une quelconque des revendications 1 à 7 dans lequel l'impédance de transparence (Zt) d'au moins une antenne passive du premier dispositif de communication est choisie égale à l'impédance d'adaptation (Za) de cette antenne passive.

9. Procédé de transmission selon l'une quelconque des revendications 1 à 8 dans lequel l'impédance de diffusion (Zd) d'au moins une antenne passive du premier dispositif de communication est obtenue en reliant ladite antenne passive à une charge d'impédance nulle ou infinie.

10. Procédé de transmission selon l'une quelconque des revendications 1 à 9 dans lequel l'impédance de diffusion et l'impédance de transparence d'une antenne passive sont choisies de sorte que la différence entre le niveau du signal rétrodiffusé par l'antenne passive réglée sur son impédance de diffusion et le niveau du signal rétrodiffusé par l'antenne passive réglée sur son impédance de transparence soit supérieure à un niveau de bruit d'estimation du canal de transmission au niveau du deuxième dispositif de communication.

11. Procédé de transmission selon l'une quelconque des revendications 1 à 10 dans lequel le premier dispositif de communication comprend une pluralité d'antennes passives, au moins deux signaux véhiculant des symboles pilotes associés à deux antennes passives distinctes sont transmis par la première antenne active dans des bandes de fréquence disjointes.

12. Procédé de transmission selon la revendication 11 dans lequel lesdits au moins deux signaux sont transmis par la première antenne active durant des intervalles de temps se recoupant.

13. Programme d'ordinateur (PROG2) comportant des instructions pour l'exécution des étapes du procédé de transmission selon l'une quelconque des revendications 1 à 12 lorsque ledit programme est exécuté par un ordinateur.

14. Support d'enregistrement lisible par un ordinateur sur lequel est enregistré un programme d'ordinateur selon la revendication 13.

15. Procédé d'estimation d'un canal de transmission (CH) entre un premier dispositif de communication multi-antennes (2) et un deuxième dispositif de communication (3), ledit procédé étant destiné à être mis en oeuvre par le deuxième dispositif de communication et comprenant, pour au moins une antenne du deuxième dispositif de communication :

- une étape de réception (F10) par ladite au moins une antenne d'une pluralité de signaux transmis conformément à un procédé de transmission selon l'une quelconque des revendications 1 à 12 par le premier dispositif de communication et véhiculant des symboles pilotes ; et
- une étape d'estimation (F20) du canal de transmission entre les antennes du premier dispositif et ladite antenne du deuxième dispositif de communication en utilisant les symboles pilotes véhiculés par lesdits signaux reçus.

16. Dispositif de communication (1), dit premier dispositif de communication, configuré pour transmettre des symboles pilotes destinés à permettre à un deuxième dispositif de communication d'estimer un canal de transmission entre le premier et le deuxième dispositif de communication, le premier dispositif de communication comprenant une première antenne configurée de sorte à être active en transmission et au moins une deuxième antenne configurée de sorte à être passive en transmission, ledit premier dispositif de communication étant **caractérisé en ce que** ladite première antenne active (ANT1) est en outre configurée pour :

- transmettre au moins un signal véhiculant des symboles pilotes associés à ladite première antenne active, ladite au moins une deuxième antenne passive étant alors réglée sur une impédance dite de transparence, cette impédance de transparence étant choisie de sorte à obtenir un niveau de signal rétrodiffusé par ladite au moins une deuxième antenne passive inférieur à un premier seuil ; et
- transmettre au moins un signal véhiculant des symboles pilotes associés à ladite au moins une deuxième antenne passive, ladite au moins une deuxième antenne passive étant alors réglée sur une impédance dite de diffusion choisie de sorte à obtenir un niveau de signal rétrodiffusé par ladite au moins une deuxième antenne passive supérieur à un deuxième seuil supérieur au premier seuil.

17. Système de communication (1) comprenant :

- un premier dispositif de communication (2) multi-antennes selon la revendication 16 ; et
- un deuxième dispositif de communication (3) comprenant au moins une antenne apte à recevoir une pluralité de signaux transmis par le premier dispositif de communication et véhiculant des symboles pilotes, ledit deuxième dispositif de communication comprenant en outre un module d'estimation (3A) du canal de transmission entre les antennes du premier dispositif de communication et ladite antenne du deuxième dispositif de communication configuré pour utiliser les symboles pilotes véhiculés par lesdits signaux reçus.

**Patentansprüche**

1. Übertragungsverfahren für Pilotsymbole, die dazu bestimmt sind, einer zweiten Kommunikationsvorrichtung (3) zu ermöglichen, einen Übertragungskanal zwischen der ersten und der zweiten Kommunikationsvorrichtung zu bewerten, durch eine erste Kommunikationsvorrichtung (2), wobei die erste Kommunikationsvorrichtung eine erste Antenne (ANTI), die so konfiguriert ist, dass sie bei der Übertragung aktiv ist, und mindestens eine zweite Antenne (ANT2,...,ANTN) umfasst, die so konfiguriert ist, sie dass bei der Übertragung passiv ist, wobei das Verfahren **dadurch gekennzeichnet ist, dass** es umfasst:

- einen Schritt des Übertragens (E10) mindestens eines Signals, das der ersten aktiven Antenne zugeordnete Pilotsymbole vermittelt, durch die aktive erste Antenne (ANTI) und währenddessen die mindestens eine passive zweite Antenne (ANT2,...,ANTN) auf eine sogenannte Transparenzimpedanz (Zt, Za) eingestellt wird, wobei die Transparenzimpedanz so gewählt wird, dass sie einen Pegel des von der mindestens einen passiven zweiten Antenne rückgestrahlten Signals unterhalb eines ersten Schwellenwertes erhält; und
- mindestens einen Schritt des Übertragens (E20) mindestens eines Signals, das der mindestens einen passiven zweiten Antenne (ANT2,...,ANTN) zugeordnete Pilotsymbole vermittelt, durch die aktive erste Antenne (ANTI) und währenddessen die mindestens eine passive zweite Antenne (ANT2,...,ANTN) auf eine Ausstrahlungsimpedanz (Zd) eingestellt wird, die so gewählt wird, dass sie einen Pegel des von der mindestens einen passiven zweiten Antenne rückgestrahlten Signals oberhalb eines zweiten Schwellenwertes, der über dem ersten Schwellenwert liegt, erhält.

2. Übertragungsverfahren nach Anspruch 1, wobei die erste Kommunikationsvorrichtung mehrere passive Antennen (ANT2,...,ANTN) umfasst und bei dem mindestens einen Schritt des Übertragens die passiven Antennen so eingestellt werden, dass nur eine einzige passive Antenne während eines selben Zeitintervalls und in einem bestimmten selben Frequenzband rückstrahlt.

3. Übertragungsverfahren nach Anspruch 2, wobei bei einem Schritt des Übertragens die aktive erste Antenne das mindestens eine Signal überträgt, das die einer der passiven Antennen zugeordneten Pilotsymbole vermittelt, die andere oder die anderen passiven Antennen der ersten Kommunikationsvorrichtung auf ihre Transparenzimpedanzen eingestellt werden.

4. Übertragungsverfahren nach Anspruch 2 oder 3, wobei die Signale, die die den passiven Antennen zugeordneten Pilotsymbole vermitteln, durch aktive erste Antenne während unzusammenhängender Zeitintervalle übertragen werden.

5. Übertragungsverfahren nach einem der Ansprüche 1 bis 4, wobei die Pilotsymbole, die von der aktiven ersten Antenne übertragen werden, so gewählt werden, dass einen Rauschpegel der Bewertung des Übertragungskanals an der zweiten Kommunikationsvorrichtung minimiert wird.

6. Übertragungsverfahren nach einem der Ansprüche 1 bis 5, wobei die Pilotsymbole, die von der aktiven ersten Antenne übertragen werden, so gewählt werden, dass, wenn A eine Dimensionsmatrix TxN bezeichnet, wobei N die Anzahl der Antennen der ersten Kommunikationsvorrichtung, T die Gesamtanzahl der Pilotsymbole ist, die von der aktiven ersten Antenne übertragen werden und den N Antennen der ersten Kommunikationsvorrichtung zugeordnet sind, und die Matrix A in einer Spalte die T Pilotsymbole, die von der aktiven ersten Antenne übertragen werden, und in ihrer oder ihren anderen Spalten die Pilotsymbole enthält, die von der mindestens einen passiven zweiten Antenne rückgestrahlt werden, die Matrix $A^\dagger A$ invertierbar ist, wobei $\dagger$ den Hermiteschen Operator bezeichnet.

7. Übertragungsverfahren nach Anspruch 6, wobei die von der ersten Antenne übertragenen Pilotsymbole so gewählt werden, dass die Spur der inversen Matrix der Matrix $A^\dagger A$ minimiert wird.

8. Übertragungsverfahren nach einem der Ansprüche 1 bis 7, wobei die Transparenzimpedanz (Zt) mindestens einer passiven Antenne der ersten Kommunikationsvorrichtung gleich der Anpassungsimpedanz (Za) dieser passiven Antenne gewählt wird.

9. Übertragungsverfahren nach einem der Ansprüche 1 bis 8, wobei die Ausstrahlungsimpedanz (Zd) mindestens einer passiven Antenne der ersten Kommunikationsvorrichtung erhalten wird, indem die passive Antenne mit einer Impedanzlast null oder unendlich verbunden wird.

10. Übertragungsverfahren nach einem der Ansprüche 1 bis 9, wobei die Ausstrahlungsimpedanz und die Transparenzimpedanz einer passiven Antenne so gewählt werden, dass die Differenz zwischen dem Pegel des Signals, das von der auf ihre Ausstrahlungsimpedanz eingestellten passiven Antenne rückgestrahlt wird, und dem Pegel des Signals, das von der auf ihre Transparenzimpedanz eingestellten passiven Antenne rückgestrahlt wird, an der zweiten Kommunikationsvorrichtung über einem Rauschpegel der Bewertung des Übertragungskanals liegt.

11. Übertragungsverfahren nach einem der Ansprüche 1 bis 10, wobei die erste Kommunikationsvorrichtung mehrere passive Antennen umfasst, wobei mindestens zwei Signale die zwei unterschiedlichen passiven Antennen zugeordnete Pilotsymbole vermitteln, über die aktive erste Antenne in unzusammenhängenden Frequenzbändern übertragen werden.

12. Übertragungsverfahren nach Anspruch 11, wobei die mindestens zwei Signale durch die aktive erste Antenne während sich überschneidender Zeitintervalle übertragen werden.

13. Computerprogramm (PROG2), umfassend Anweisungen für die Ausführung der Schritte des Übertragungsverfahrens nach einem der Ansprüche 1 bis 12, wenn das Programm von einem Computer ausgeführt wird.

14. Speichermedium, das durch einen Computer lesbar ist, auf dem ein Computerprogramm nach Anspruch 13 gespeichert ist.

15. Bewertungsverfahren für einen Übertragungskanal (CH) zwischen einer ersten Mehrantennen-Kommunikationsvorrichtung (2) und einer zweiten Kommunikationsvorrichtung (3), wobei das Verfahren dazu bestimmt ist, vom der zweiten Kommunikationsvorrichtung durchgeführt zu werden und für mindestens eine Antenne der zweiten Kommunikationsvorrichtung umfasst:

- einen Schritt des Empfangens (F10) mehrerer Signale, die konform mit einem Übertragungsverfahren nach einem der Ansprüche 1 bis 12 von der ersten Kommunikationsvorrichtung übertragen werden und Pilotsymbole vermitteln, durch die mindestens eine Antenne; und
- einen Schritt des Bewertens (F20) des Übertragungskanals zwischen den Antennen der ersten Vorrichtung und der Antenne der zweiten Kommunikationsvorrichtung durch Verwenden von Pilotsymbolen, die durch die empfangenen Signale vermittelt werden.

16. Kommunikationsvorrichtung (1), erste Kommunikationsvorrichtung genannt, die dazu konfiguriert ist, Pilotsymbole zu übertragen, die dazu bestimmt sind, einer zweiten Kommunikationsvorrichtung zu ermöglichen, einen Übertragungskanal zwischen der ersten und der zweiten Kommunikationsvorrichtung zu bewerten, wobei die erste Kommunikationsvorrichtung eine erste Antenne, die so konfiguriert ist, dass sie bei der Übertragung aktiv ist, und mindestens eine zweite Antenne umfasst, die so konfiguriert ist, sie dass bei der Übertragung passiv ist, wobei die erste Kommunikationsvorrichtung **dadurch ge-**

**kennzeichnet ist, dass** die aktive erste Antenne (ANTI) außerdem zu Folgendem konfiguriert ist:

- Übertragen mindestens eines Signals, das der ersten aktiven Antenne zugeordnete Pilotsymbole vermittelt, wobei die mindestens eine passive zweite Antenne auf eine sogenannte Transparenzimpedanz eingestellt wird, wobei diese Transparenzimpedanz so gewählt wird, dass sie einen Pegel des von der mindestens einen passiven zweiten Antenne rückgestrahlten Signals unterhalb eines ersten Schwellenwertes erhält; und
- Übertragen mindestens eines Signals, das der mindestens einen passiven zweiten Antenne zugeordnete Pilotsymbole vermittelt, wobei die mindestens eine passive zweite Antenne auf eine sogenannte Ausstrahlungsimpedanz eingestellt wird, so dass sie einen Pegel des von der mindestens einen passiven zweiten Antenne rückgestrahlten Signals unterhalb eines zweiten Schwellenwertes, der über dem ersten Schwellenwert liegt, erhält.

17. Kommunikationssystem (1), umfassend:

- eine erste Mehrantennen-Kommunikationsvorrichtung (2) nach Anspruch 16; und
- eine zweite Kommunikationsvorrichtung (3), umfassend mindestens eine Antenne, die dazu geeignet ist, mehrere Signale zu empfangen, die von der ersten Kommunikationseinrichtung übertragen werden und Pilotsymbole vermitteln, wobei die zweite Kommunikationsvorrichtung außerdem ein Modul zum Bewerten (3A) des Kommunikationskanals zwischen den Antennen der ersten Kommunikationsvorrichtung und der Antenne der zweiten Kommunikationsvorrichtung umfasst, das dazu konfiguriert ist, die durch die empfangenen Signale vermittelten Pilotsymbole zu verwenden.

**Claims**

1. Method for transmission, by a first communication device (2), of pilot symbols which are intended to make it possible for a second communication device (3) to estimate a transmission channel between the first and the second communication device, the first communication device comprising a first antenna (ANTI) configured so as to be active for transmission and at least one second antenna (ANT2, ..., ANTN) configured so as to be passive for transmission, said method being **characterized in that** it comprises:

- a step (E10) of transmission, by the active first antenna (ANTI), of at least one signal carrying pilot symbols which are associated with said active first antenna, and during which said at least one passive second antenna (ANT2, ..., ANTN) is set to an impedance referred to as a transparent impedance (Zt, Za), said transparent impedance being chosen so as to obtain a level of signal backscattered by said at least one passive second antenna which is below a first threshold; and

- at least one step (E20) of transmission, by the active first antenna (ANTI), of at least one signal carrying pilot symbols which are associated with said at least one passive second antenna (ANT2, ..., ANTN), and during which said at least one passive second antenna (ANT2, ..., ANTN) is set to an impedance, referred to as a scattering impedance (Zd), chosen so as to obtain a level of signal backscattered by said at least one passive second antenna which is above a second threshold, which is above the first threshold.

2. Transmission method according to Claim 1, wherein the first communication device comprises a plurality of passive antennas (ANT2, ..., ANTN) and, during said at least one transmission step, said passive antennas are set so that only a single passive antenna backscatters during the same time interval and in the same determined frequency band.

3. Transmission method according to Claim 2, wherein, during a transmission step, the active first antenna transmits said at least one signal carrying the pilot symbols which are associated with one of said passive antennas, and the one or more other passive antennas of the first communication device are set to their transparent impedances.

4. Transmission method according to Claim 2 or 3, wherein the signals carrying the pilot symbols associated with said passive antennas are transmitted by the active first antenna during disjoint time intervals.

5. Transmission method according to any one of Claims 1 to 4, wherein the pilot symbols transmitted by the active first antenna are chosen so as to minimize a level of noise in the estimate of the transmission channel at the second communication device.

6. Transmission method according to any one of Claims 1 to 5, wherein the pilot symbols transmitted by the active first antenna are chosen so that, if A denotes a matrix of dimensions T×N, where N is the number of antennas of the first communication device, T is the total number of pilot symbols transmitted by the active first antenna which are associated with the N antennas of the first communication device, and said matrix A contains, in a column, the T pilot symbols transmitted by the active first antenna and, in its one or more other columns, the pilot symbols backscattered by said at least one passive second antenna, the matrix $A^{\dagger}A$ is invertible, $^{\dagger}$ denoting the Hermitian operator.

7. Transmission method according to Claim 6, wherein the pilot symbols transmitted by the first antenna are chosen so as to minimize the trace of the inverse matrix of the matrix $A^{\dagger}A$.

8. Transmission method according to any one of Claims 1 to 7, wherein the transparent impedance (Zt) of at least one passive antenna of the first communication device is chosen to be equal to the matching impedance (Za) of this passive antenna.

9. Transmission method according to any one of Claims 1 to 8, wherein the scattering impedance (Zd) of at least one passive antenna of the first communication device is obtained by connecting said passive antenna to a load of zero or infinite impedance.

10. Transmission method according to any one of Claims 1 to 9, wherein the scattering impedance and the transparent impedance of a passive antenna are chosen so that the difference between the level of the signal backscattered by the passive antenna set to its scattering impedance and the level of the signal backscattered by the passive antenna set to its transparent impedance is above a level of noise in the estimate of the transmission channel at the second communication device.

11. Transmission method according to any one of Claims 1 to 10, wherein the first communication device comprises a plurality of passive antennas, and at least two signals carrying pilot symbols associated with two distinct passive antennas are transmitted by the active first antenna in disjoint frequency bands.

12. Transmission method according to Claim 11, wherein said at least two signals are transmitted by the active first antenna during overlapping time intervals.

13. Computer program (PROG2), comprising instructions for executing the steps of the transmission method according to any one of Claims 1 to 12 when said program is executed by a computer.

14. Computer-readable storage medium, on which a computer program according to Claim 13 is stored.

15. Method for estimating a transmission channel (CH) between a multi-antenna first communication device (2) and a second communication device (3), said method being intended to be implemented by the second communication device and comprising, for at least one antenna of the second communication device:

- a step (F10) of reception, by said at least one antenna, of a plurality of signals which are transmitted, in accordance with a transmission method according to any one of Claims 1 to 12, by the first communication device and carry pilot symbols; and
- a step (F20) of estimating the transmission channel between the antennas of the first device and said antenna of the second communication device using the pilot symbols carried by said received signals.

16. Communication device (1), referred to as the first communication device, configured to transmit pilot symbols which are intended to make it possible for a second communication device to estimate a transmission channel between the first and the second communication device, the first communication device comprising a first antenna configured so as to be active for transmission and at least one second antenna configured so as to be passive for transmission, said first communication device being **characterized in that** said active first antenna (ANTI) is further configured to:

- transmit at least one signal carrying pilot symbols which are associated with said active first antenna, said at least one passive second antenna then being set to an impedance referred to as a transparent impedance, this transparent impedance being chosen so as to obtain a level of signal backscattered by said at least one passive second antenna which is below a first threshold; and
- transmit at least one signal carrying pilot symbols which are associated with said at least one passive second antenna, said at least one passive second antenna then being set to an impedance, referred to as a scattering impedance, chosen so as to obtain a level of signal backscattered by said at least one passive second antenna which is above a second threshold, which is above the first threshold.

17. Communication system (1), comprising:

- a multi-antenna first communication device (2) according to Claim 16; and
- a second communication device (3) comprising at least one antenna which is able to receive a plurality of signals which are transmitted by the first communication device and carry pilot symbols, said second communication device further comprising a module (3A) for estimating the transmission channel between the antennas of the first communication device and said antenna of the second communication device, which is configured to use the pilot symbols carried by said received signals.

FIG.1

FIG.2

FIG.3

FIG.4

ANT1 TX $a_1$
ANT2 ... ANTN —→ Zt=Za — E10

n=2 — E20

ANT1 TX $a_n$
ANTn —→ Zd
ANTj , j≠n —→ Zt=Za — E30

E40

n++ — E50     n=N ?     oui

non     STOP — E60

## FIG.5

RX $y_1$........$y_N$ — F10

ESTIM $h_1$ ....... $h_N$ — F20

## FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Multi-antenna Wireless Energy Transfer for Backscatter Communication Systems. **YANG GANG et al.** IEEE Journal on Selected Areas in Communications. IEEE, 01 Décembre 2015, vol. 33, 2974-2987

- Passive UHF RFID Tag With Backscatter Diversity. **HSIN-CHIN LIU et al.** IEEE Antennas and Wireless Propagation Letters. IEEE, 01 Janvier 2011, vol. 10, 415-418
- **DE N. VAN HUYNH et al.** Ambient Backscatter Communications: A Contemporary Survey. *Networking and Internet Architecture (cf. NI),* Décembre 2017